# EUROPEAN PATENT APPLICATION

(11) **EP 2 843 019 A1**
(43) Date of publication of application: **04.03.2015**
(21) Application number: 14180596.0
(22) Date of filing: 12.08.2014
(51) Int. Cl.: C09D 183/14, C08G 77/58

(54) **Antibacterial hybrid layer operating against pathogenic bacterial strains, particularly against the bacterial strain MRSA, and a method for its preparation**

(30) Priority: 28.08.2013 CZ 20130656
(71) Applicant: Technicka Univerzita V Liberci, 461 17 Liberec 1 (CZ)
(72) Inventor: Lovetinska-Slamborova, Irena, 10100 Praha (CZ); Zajicova, Veronika, 51251 Lomnice nad Popelkou (CZ); Exnar, Petr, 50301 Hradec Kralove (CZ); Stibor, Ivan, 19000 Praha (CZ)
(74) Representative: Musil, Dobroslav

(57) **Abstract**

The invention hereunder concerns an antibacterial hybrid layer operating against pathogenic bacteria, particularly against the bacterial strain MRSA, made up of hybrid polymer resulting from the reaction of 3-(trialkoxysilyl) propyl methacrylate and/or 3-(trialkoxysilyl) propyl acrylate with 3-glycidoxy-propyltrialkoxy-silane, titanium alkoxide and silicon alkoxide with addition of soluble salts of silver, copper and zinc and potentially also with addition of titanium oxide nanoparticles. The hybrid polymer may further also contain addition of soluble salts of chromium (III) and/or vanadium or up to 90 mol. % of 3-(trialkoxysilyl) propyl methacrylate may be replaced with an equimolar mixture of methyl methacrylate and silicon alkoxide and, similarly, up to 90 mol. % of 3-(trialkoxysilyl) propyl acrylate may be replaced with an equimolar mixture of methyl acrylate and silicon alkoxide.

The invention hereunder further concerns development of an antibacterial hybrid layer operating against pathogenic bacteria, particularly against the bacterial strain MRSA, by application of sol prepared by the sol-gel method on substrate surface and subsequent polymerization of the layer. The sol is prepared from 3-(trialkoxysilyl) propyl methacrylate and/or 3-(trialkoxysilyl) propyl acrylate, 3-glycidoxy-propyltrialkoxy-silane, titanium alkoxide, silicon alkoxide, soluble salts of silver, copper and zinc, radical polymerization catalyst, alcohol as solvent, water and acid as catalyst of polycondensation of an inorganic part of the hybrid network so that the molar ratio of 3-(trialkoxysilyl) propyl methacrylate and/or 3-(trialkoxysilyl)propyl acrylate to 3-glycidoxy-propyltrialkoxy-silane is 99:1 to 70:30, the molar ratio of 3-(trialkoxysilyl) propyl methacrylate and/or 3-(trialkoxysilyl)propyl acrylate to titanium alkoxide is 95:5 to 50:50, the molar ratio of 3-(trialkoxysilyl) propyl methacrylate and/or 3-(trialkoxysilyl)propyl acrylate to silicon alkoxide (without the share of silicon alkoxide replacing in the equimolar mixture with alkyl methacrylate and/or alkyl acrylate a part of 3-(trialkoxysilyl) propyl methacrylate or 3-(trialkoxysilyl)propyl acrylate) is 99:1 to 40:60, the content of silver, copper and zinc compounds (recalculated to metals in dry matter) is 0.1 to 5 wt. % for Ag, 0.1 to 10 wt. % for Cu and 0.1 to 5 wt. % for Zn, the content of radical polymerization catalyst is 0.2 to 10 wt. % related to dry matter weight and the molar ratio of the water content k = [H₂O]/[3-(trialkoxysilyl) propyl methacrylate + 3-(trialkoxysilyl) propyl acrylate + 3-glycidoxypropyltrialkoxysilan + titanium alkoxide + silicon alkoxide] reaches the values of k = 1.6 to 2.8, while the sol after the application and solvent evaporation undergoes thermally initiated polymerization at 80 to 200 °C for 30 minutes to 6 hours or photoinitiated polymerization for 1 second to 3 hours.

## Description

### Technology area

The invention hereunder concerns an antibacterial hybrid layer operating against pathogenic bacteria, particularly against the bacterial strain MRSA.

The invention also concerns the method of development of an antibacterial hybrid layer operating against pathogenic bacteria, particularly against the bacterial strain MRSA, by application of sol prepared by the sol-gel method on a substrate surface and by subsequent polymerization of the layer.

### Existing state of technology

The threat of infections caused by pathogenic bacteria, particularly by the resistant pathogenic bacteria MRSA (Methycilin Resistant Staphylococcus Aureus), currently represents a worldwide problem. Individuals particularly exposed to the risk are hospital patients in intensive care units, at in-patient wards but also in other hospital premises. The pathogenic bacteria may use many spreading paths - by air, water, food or contact with contaminated surfaces. Classical disinfection procedures cannot be applied comprehensively to the entire premises of intensive care units or operating rooms. Available physical methods (steam, high temperature, irradiation) and chemical methods (chlorinated agents) are either ineffective or they destroy the environment along with the undesired bacteria. Since diseases caused by pathogenic bacteria, particularly by the resistant pathogenic bacteria MRSA, are very difficult to cure, the basic requirement is to completely eliminate those bacterial strains from healthcare facilities.

The Czech patent No. 303250 describes an antibacterial layer operating against pathogenic bacteria, particularly against the bacterial strain MRSA, which consists of hybrid polymer of trialkoxy-silyl-propoxy-methyl methacrylate, i.e. according to the new nomenclature 3-(trialkoxysilyl) propyl methacrylate, and titanium alkoxide with an admixture of silver and copper nitrates. Further, in one convenient execution the hybrid polymer also contains nanoparticles of titanium oxide, and up to 70 mol. % of trialkoxysilyl-propoxy-methylmethacrylate, i.e. 3-(trialkoxy-silyl) propyl methacrylate, is replaced with an equimolar mixture of methyl methacrylate and silicon alkoxide. According to the Czech patent No. 303250, the method of development of the antibacterial layer operating particularly against the bacterial strain MRSA and other pathogenic bacteria consists in application of sol prepared by the sol-gel method on substrate surface and in subsequent thermal treatment of the layer, while the sol is prepared from trialkoxysilyl-propoxy-methylmethacrylate, i.e. 3-(trialkoxysilyl) propyl methacrylate, titanium alkoxide, silver nitrate, copper nitrate, radical polymerization catalyst, alcohol as solvent, water and nitric acid as a catalyst of polycondensation of an inorganic part of the hybrid network so that the molar ratio of trialkoxysilyl-propoxy-methylmethacrylate, i.e. 3-(trialkoxysilyl) propyl methacrylate, to titanium alkoxide in the reaction mixture is 95 : 5 to 50 : 50, the content of silver and copper compounds (recalculated to metal in dry matter) is 0.1 to 5 wt. % for Ag and 0.1 to 10 wt. % for Cu, the content of radical polymerization catalyst is 0.2 to 10 wt. % related to dry matter weight and the molar ratio of water content k = [H₂O]/[alkyl-alkoxysilane + titanium alkoxide] is in the range from 1.6 to 2.8, while the sol, after its application and after solvent evaporation, is thermally treated at 80 to 200 °C for 30 minutes to 6 hours. Meanwhile, the trialkoxysilyl -propoxy-methylmethacrylate, i.e. 3-(trialkoxysilyl) propyl methacrylate, is trimethoxysilyl-propoxy-methylmethacrylate, i.e. according to the new nomenclature 3-(trimethoxysilyl) propyl methacrylate (TMSPM), and the titanium alkoxide is titanium isopropoxide. The radical polymerization catalyst is dibenzoyl-peroxide (BPO). Photoactive nanoparticles of titanium oxide may be added into the sol during its preparation, in the quantity corresponding to the ratio of dry matter to titanium oxide nanoparticles 99: 1 to 25: 75. After its application and after solvent evaporation the sol is thermally treated at 150 °C for 2 to 4 hours. Up to 70 mol. % of trialkoxysilyl-propoxy-methylmethacrylate, i.e. 3-(trialkoxysilyl) propyl methacrylate, is replaced with an equimolar mixture of methyl methacrylate and silicon alkoxide.

According to the Czech patent No. 303861, the composition of the sol for preparation of the antibacterial layer in comparison with the Czech patent No. 303250 included also admixtures of soluble salts of zinc, chromium (III) and/or vanadium (0.1 to 5 wt. % Zn, 0.1 to 5 wt. % Cr and/or 0.1 to 5 wt. % V) and the option to polymerize the sol, after its application and after solvent evaporation, with photoinitiated polymerization for 1 second to 3 hours.

In certain applications, particularly on metals, it has been found out that it is necessary to increase resistance of the layer against wear, to improve adhesion of the antibacterial layer and also to expand the range of materials that can be used as a base for the antibacterial layer.

Therefore the objective of this invention is to increase resistance against wear, to improve adhesion of the antibacterial layer particularly to metals, without reducing their antibacterial efficiency against pathogenic bacteria, particularly against the bacterial strain MRSA, and to expand the range of materials that can be used as a base for the antibacterial layer.

### Principle of the invention

The objective of the invention has been achieved by an antibacterial layer, the essence of which consists in the fact that it is made up of hybrid polymer formed by the reaction of 3-(trialkoxysilyl) propyl methacrylate and/or 3-(trialkoxysilyl) propyl acrylate with 3-glycidoxy-propyltrialkoxy-silane, titanium alkoxide and silicon alkoxide, with an admixture of nitrates, acetylacetonates or other salts of silver, copper and zinc. Apart from the mentioned salts of silver, copper and zinc, it is also convenient to add salts of chromium (III) and/or vanadium, which further increase antibacterial effects of the prepared layer. In another convenient execution of the invention it has been proposed to add into the layer nanoparticles of photoactive titanium oxide which further increase the already high antibacterial effects of the layer. According to another convenient execution, a part of 3-(trialkoxysilyl) propyl methacrylate and/or 3-(trialkoxysilyl) propyl acrylate can be replaced with an equimolar mixture of alkyl methacrylate or alkyl acrylate and silicon alkoxide.

The principle of the method of development of the antibacterial layer consists in preparation of the initial sol using the sol-gel method from 3-(trialkoxysilyl) propyl methacrylate and/or 3-(trialkoxysilyl) propyl acrylate and 3-glycidoxy-propyltrialkoxy-silane, titanium alkoxide and silicon alkoxide, with an admixture of silver, copper and zinc salts, or also chromium (III) and/or vanadium salts, then the sol is applied as a layer on the surface of an item to be protected and after evaporation of volatile components the layer is stabilized by thermally initiated polymerization at 80 to 200 °C or by phobinitiated polymerization to improve its mechanical properties and resistance against layer removal from the surface of the protected item. Another convenient execution t consists in the fact that nanoparticles of photoactive titanium oxide are added into the sol during its preparation, which further increases the already high antibacterial effects of the layer. Another convenient execution consists in the fact that a part of 3-(trialkoxysilyl) propyl methacrylate and/or 3-(trialkoxysilyl) propyl acrylate can be replaced with an equimolar mixture of alkyl methacrylate or alkyl acrylate and silicon alkoxide.

The basis of the solution is development of an antibacterial layer based on 3-(trialkoxysilyl) propyl methacrylate and/or 3-(trialkoxysilyl) propyl acrylate with 3-glycidoxy-propyltrialkoxy-silane, titanium alkoxide and silicon alkoxide with an admixture of silver, copper and zinc salts. The admixture of photocatalytic nanoparticles of titanium oxide only supports and extends the antibacterial effects of the resulting layer, while the antibacterial effect of the resulting layer occurs due to its primary formation and not due to the admixture of photocatalytic nanoparticles of titanium oxide. The resulting improvement of antibacterial properties occurs due a synergic effect of titanium atoms in the inorganic lattice of the hybrid polymer and due to effects of ions or nanoparticles of silver, copper, zinc, chromium (III) and vanadium, or due to potential support by the photocatalytic effect of titanium oxide nanoparticles. Intense antibacterial properties are demonstrated after exposure to UV-A light in the range 315 to 380 nm, however even visible light is sufficient to maintain the antibacterial properties of the surfaces. The layer can be applied on surfaces made of glass, ceramics, metals and plastics. A very important feature of the layers is also the fact that the antibacterial properties are preserved even after repeated washing or sterilization (this has been verified after 50 washing cycles or after 20 cycles of extreme sterilization at 130 °C for 1 hour).

### Examples of execution of the invention

The invention will be described on an example of a technological procedure of layer formation and also on examples of antibacterial effects of layers prepared hereunder.

The initial sol will be prepared with a modified sol-gel method which is based on dissolution of 3-(trialkoxysilyl) propyl methacrylate (conveniently 3-(trimethoxysilyl) propyl methacrylate TMSPM) and/or 3-(trialkoxysilyl) propyl acrylate (conveniently 3-(trimethoxysilyl) propyl acrylate TMSPA), 3-glycidoxy-propyltrialkoxy-silane (conveniently 3-glycidoxy-propyltrimethoxy-silane GLYMO, also called trimethoxy [3-(oxiranylmethoxy) propyl] silane TMSPGE or [3-(2,3-epoxypropoxy)-propyl]-trimethoxysilane), titanium alkoxide (conveniently titanium isopropoxide IPTI) and silicon alkoxide (conveniently silicon ethoxide TEOS) with an admixture of soluble silver, copper and zinc salts (conveniently nitrates) and with an admixture of radical polymerization catalyst (for thermally initiated polymerization conveniently dibenzoyl-peroxide BPO, for photoinitiated polymerization conveniently bis(2,4,6-trimethylbenzoyl) phenylphosphine oxide or 2-hydroxy-2-methyl-1-phenyl-propan-1-on) in suitable alcohol (conveniently ethanol or isopropyl alcohol) and with subsequent admixture of acid (conveniently nitric acid) with water so that the molar ratio of 3-(trialkoxysilyl) propyl methacrylate and/or 3-(trialkoxysilyl) propyl acrylate to 3-glycidoxy-propyltrialkoxy-silane is 99 : 1 to 70 : 30, the molar ratio of 3-(trialkoxysilyl) propyl methacrylate and/or 3-(trialkoxysilyl) propyl acrylate to titanium alkoxide is 95:5 to 50:50, the molar ratio of 3-(trialkoxysilyl) propyl methacrylate and/or 3-(trialkoxysilyl) propyl acrylate to silicon alkoxide (without the share of silicon alkoxide replacing in the equimolar mixture with alkyl methacrylate and/or alkyl acrylate a part of 3-(trialkoxysilyl) propyl methacrylate or 3-(trialkoxysilyl)propyl acrylate) is 99:1 to 40:60, the content of silver, copper and zinc containing compounds (recalculated to metals in dry matter) is 0.1 to 5 wt. % for Ag, 0.1 to 10 wt. % for Cu 0.1 and 5 wt. % for Zn, radical polymerization catalyst 0.2 to 10 wt. % related to dry matter weight and the molar ratio of water content k = [H₂O]/[3-(trialkoxysilyl) propyl methacrylate + 3-(trialkoxysilyl) propyl acrylate + 3-glycidoxy-propyltrialkoxy-silane + titanium alkoxide + silicon alkoxide] reaches the value of k = 1.6 to 2.8. Apart from silver, copper and zinc, it is convenient to add 0.1 to 5 wt. % Cr and/or 0.1 to 5 wt. % V in form of soluble salts into the initial reaction mixture (recalculated to metals in dry matter).

It is also possible to add nanoparticles of photo-catalytically active titanium oxide into the prepared sol (the weight ratio of dry matter to titanium oxide nanoparticles shall be 99: 1 to 25: 75). According to a convenient execution, up to 90 mol. % of 3-(trialkoxysilyl) propyl methacrylate in the reaction mixture can be replaced with an equimolar mixture of methyl methacrylate and silicon alkoxide and, similarly up to 90 mol. % of 3-(trialkoxysilyl) propyl acrylate in the reaction mixture can be replaced with an equimolar mixture of methyl acrylate and silicon alkoxide. The prepared sol (potentially including nanoparticles of titanium oxide dispersed in the sol with ultrasound) shall be applied on the substrate surface which will carry the antibacterial layer (by pulling, centrifugation, spraying, dipping or using another suitable method) and after solvent evaporation the created layer is polymerized by thermally initiated or photoinitiated polymerization. The thermally initiated polymerization is performed at 80 to 200 °C (conveniently at 150 °C) for 30 minutes to 6 hours (conveniently for3 hours).

Selection between thermally initiated and photoinitiated polymerization depends on thermal resistance of the substrate on which the layer was applied, i.e. on thermal resistance of the item to be protected with the developed antibacterial layer.

For example, for polypropylene with thermal resistance up to 80 °C it is more convenient to select photoinitiated polymerization, while on more resistant substrates it is possible to use thermally initiated polymerization at 150 °C etc.

A source used for photoinitiated polymerization can be a fluorescent lamp or bulb lamp emitting (in addition to other rays) UV-A or UV-B radiation for 1 second to 3 hours, while the necessary exposure time is defiend by the employed catalyst , specific energy distribution of the employed source of light and intensity of the layer exposure.

The above-described treatment results in a slightly porous inorganic-organic layer of hybrid polymer with immobilized silver, copper and zinc (in form of ions, atoms or nanoparticles) and potentially also with chromium and vanadium (in form of ions) and with nanoparticles of titanium oxide. Porosity of the prepared layer is indispensable for its function (antibacterial properties) because if the metal particles (in form of ions, atoms or nanoparticles) and nanoparticles of titanium oxide are completely enclosed inside the volume of the layer then the layer would be practically inactive in terms of antibacterial effects or its antibacterial activity would be low.

The invention will be further described with several specific examples of its execution which, however, do not document all possibilities of the invention and which are intended for more detailed description of the invention for its practical use and which are clear from this text to any average expert who is familiar with this invention.

### Example 1

The initial sols were prepared using a modified sol-gel method. To document effects of the invention in this example the ratio of 3-(trimethoxysilyl) propyl methacrylate (hereinafter TMSPM) to 3-(trimethoxysilyl) propyl acrylate (hereinafter TMSPA) was varied in the basic sol at the constant molar content of the other components: 3-glycidoxypropyl-trimethoxysilane (hereinafter GLYMO), titanium isopropoxide (hereinafter IPTI), silicon ethoxide (hereinafter TEOS) and at the constant content of silver, copper and zinc nitrates. Sols A, B and C according to the invention observed the molar ratio TMSPM + TMSPA: GLYMO: IPTI: TEOS 65: 10: 15: 10 and the weight content of Ag, Cu and Zn (expressed as metal) was 3 % of each. The term dry matter shall be understood as material of the developed layer of hybrid polymer which will remain after the application and its subsequent polymerization on the substrate - protected item, i.e. without its volatile components. The dry matter does not include weight of any potentially added nanoparticles of photoactive titanium oxide. In the case of mixture C one sample was prepared in which 50 mol. % of TMSPM was replaced with an equimolar mixture of methyl methacrylate and silicon ethoxide (marked as "a") or 50 mol. % of TMSPA was replaced with an equimolar mixture of methyl acrylate and silicon ethoxide (marked as "b"). An overview of composition of the reaction mixtures for preparation of layers in agreement with the invention is provided in Table 1.

Sols No. 1 and 2 from the Example 1 in the Czech patent No. 303861 were selected as references, with the molar ratio TMSPM to IPTI 85 : 15 and with the weight content of Ag, Cu and Zn (expressed as metals) in dry matter 3 % of each.

The calculated quantities of TMSPM, TMSPA, GLYMO, IPTI, TEOS, silver nitrate, copper nitrate and zinc nitrate were dissolved in isopropyl alcohol (or ethanol), along with 0.1 g of radical polymerization catalyst, 0.2 ml HNO₃ (c = 2 mol.dm⁻³), and calculated water quantity was added (to achieve the required molar ratio k = [H₂O]/[silanes + alkoxides]) up to the total volume of 55 ml. After hydrolysis and partial polycondensation of alkoxy groups the sols were prepared for application on substrates. Where applicable, weighted quantities of nanoparticles of photoactive titanium oxide were placed into the finished sol and dispersed ultrasonically.

**Table 1: Composition of reaction mixtures for preparation of sols and results of determination of time for 100% inhibition after exposure to UV-A (layer 1 and 2 as references, layers A through C according to the invention).**

| Layer develo ped from sol | Molar ratio TMSPM: TMSPA | Sol c | Ratio k | P | Wt. ratio dry matter: nanoparticles TiO₂ | Exposure time necessary for 100% inhibition [min] | | |
|---|---|---|---|---|---|---|---|---|
| | | | | | | MRSA | E. Coli | St. Aureus |
| 1 | 100 : 0 | 5.96 | 2.23 | T | 100 : 0 | 35 | 120 | 120 |
| 2 | 100 : 0 | 5.96 | 2.23 | T | 40 : 60 | 30 | 100 | 105 |
| A | 100 : 0 | 5.97 | 2.20 | T | 100 : 0 | 30 | 100 | 100 |
| A | 100 : 0 | 5.97 | 2.20 | S1 | 100 : 0 | 25 | 80 | 100 |
| Ae | 100 : 0 | 5.97 | 2.20 | S1 | 100 : 0 | 20 | 90 | 100 |
| A | 100 : 0 | 5.97 | 2.20 | S2 | 100 : 0 | 20 | 100 | 90 |
| B | 0 : 100 | 5.92 | 2.23 | T | 100 : 0 | 20 | 120 | 100 |
| B | 0 : 100 | 5.92 | 2.23 | S1 | 100 : 0 | 25 | 105 | 110 |
| B | 0 : 100 | 5.92 | 2.23 | S2 | 100 : 0 | 20 | 100 | 100 |
| C | 50 : 50 | 5.95 | 2.19 | T | 100 : 0 | 25 | 80 | 90 |
| C | 50 : 50 | 5.95 | 2.19 | S1 | 100 : 0 | 30 | 100 | 90 |
| C | 50 : 50 | 5.95 | 2.19 | S2 | 100 : 0 | 20 | 100 | 100 |
| C1 | 50 : 50 a | 5.95 | 2.19 | T | 100 : 0 | 20 | 90 | 95 |
| C2 | 50 : 50 b | 5.95 | 2.19 | T | 100 : 0 | 25 | 90 | 100 |
| C | 50 : 50 | 5.95 | 2.19 | T | 40 : 60 | 20 | 100 | 100 |

| | | | | | | | | |
|---|---|---|---|---|---|---|---|---|
| Legend: e ........ solvent ethanol (instead of isopropyl alcohol) Sol c ... sol concentration [g of dry matter per 100 g of the sol] Ratio k ... molar ratio k = [H₂O]/[silanes + alkoxides] P ........ method of polymerization and employed radical catalyst: T - thermal (BPO, 150 °C/3 hours) S1 - UV-A (bis(2,4,6-trimethylbenzoyl) phenylphosphine oxide, 3 hours) S2 - UV-A (2-hydroxy-2-methyl-1-phenyl-propane-1-on, 3 hours) a... 50 mol. % TMSPM was replaced with an equimolar mixture of methyl methacrylate and silicon ethoxide b... 50 mol. % TMSPA was replaced with an equimolar mixture of methyl acrylate and silicon ethoxide | | | | | | | | |

After sol application on substrates (microscopic slides) by centrifugation, the samples were left in the laboratory environment to evaporate isopropyl alcohol (or ethanol) and they were subsequently exposed to thermally initiated polymerization of methacrylate group in a drying oven at 150 °C for 3 hours or to photoinitiated polymerization using a special Philips fluorescent lamp (Actinic BL F15T8, UV-A, range 315-400 nm) for 3 hours.

Antibacterial properties of the prepared layers were tested on bacterial strains MRSA (Methycilin Resistant Staphylococcus Aureus ATCC 33591, ATCC 33592) and also on some bacterial strains of Escherichia Coli (ATCC 9637), Staphylococcus Aureus (ATCC 1260), Acinetobacter baumanii (ATCC 17978), Pseudomonas aeruginosa (ATCC 31480), Proteus vulgaris (ATCC 29905) and Proteus mirabilis (ATCC 35659). Previously prepared bacterial inoculum in physiological solution with the concentration 10⁸ CFU/ml of bacterial suspension was diluted in physiological solution to 10⁵ CFU/ml of bacterial suspension. Subsequently, 250 µl of the bacterial suspension was applied by dropping on the samples. The tested samples with the applied bacterial suspension were exposed to light emitted by the Philips special fluorescent lamp (Actinic BL F15T8, UV-A, range 315-400 nm). Samples of bacterial cultures were plated in specified time intervals on Petri dishes with blood agar. The dishes with plated bacterial cultures were incubated in a thermostat at 37.5 °C for 24 hcurs.

The incubated samples were monitored to determine dependence of the number of bacterial colonies on the exposure time to UV-A light and the time of 100% inhibition was determined (extinction of bacterial colonies on agar). The obtained results for selected bacterial strains are summarized in Table 1. For the other bacterial strains the results were similar. Antibacterial activity of the presented hybrid layers after exposure to visible light (standard fluorescent lamp) ranges from 60 to 180 minutes.

### Example 2

The initial sols were prepared using a modified sol-gel method with the procedure described in the Example 1. To document effects of the invention in this example concentrations of GLYMO and TEOS in the basic sols were varied at the expense of TMSPM, while keeping the constant content of IPTI (molar fraction 0.15 in dry matter) and the constant content of silver, copper and zinc nitrates (expressed as metals, 3 wt. % of each in dry matter). An overview of composition of reaction mixtures for preparation of sols for the Example 2 is provided in the Table 2. The sol No. 1 from the Example 1 in the Czech patent No. 303861 was selected as reference with the molar ratio TMSPM to IPTI 85 : 15 and the weight content of Ag, Cu a Zn (expressed as metal) in dry matter was 3 % of each.

After sol application on substrates (glass, stainless steel) by dipping and pulling out at 4 cm/min the samples were left in the laboratory environment to evaporate the solvent. The layers were subsequently exposed to thermally initiated polymerization in a drying oven at 150 °C for 3 hours (marked T) or to photoinitiated polymerization (catalyst bis(2,4,6-trimethylbenzoyl) phenylphosphine oxide) with UV-A emitted by the special Philips fluorescent lamp (Actinic BL F15T8, UV-A, range 315-400 nm) for 2 hours ( marked S1).

**Table 2: Composition of sols for the Example 2 (reference layer 1, layers A through E according to the invention).**

| Layer developed from sol | Molar fraction | | | | Sol c | Ratio k | Solvent |
|---|---|---|---|---|---|---|---|
| | TMSPM | TEOS | GLYMO | IPTI | | | |
| 1 | 0.85 | 0.00 | 0.00 | 0.15 | 5.96 | 2.23 | IPA |
| A | 0.65 | 0.10 | 0.10 | 0.15 | 5.97 | 2.23 | IPA |
| Ae | 0.65 | 0.10 | 0.10 | 0.15 | 5.97 | 2.23 | EtOH |
| D | 0.375 | 0.375 | 0.10 | 0.15 | 4.92 | 2.21 | IPA |
| De | 0.375 | 0.375 | 0.10 | 0.15 | 4.92 | 2.21 | EtOH |
| E | 0.55 | 0.10 | 0.20 | 0.15 | 5.90 | 2.24 | IPA |

| | | | | | | | |
|---|---|---|---|---|---|---|---|
| Legend e ........ solvent ethanol (instead of isopropyl alcohol) Sol c ... sol concentration [g of dry matter per 100 g of the sol] Ratio k ... molar ratio k = [H₂O]/[silanes + alkoxides] Solvent: IPA .... Isopropyl alcohol EtOH ... ethanol | | | | | | | |

Antibacterial properties of the prepared layers were tested with the same procedure as in the Example 1. Apart from exposure to UV-A ( range 315-400 nm) , the test also included exposure to a regular fluorescent lamp. Results for layers on glass and stainless steel after exposure to UV-A light are summarized in Table 3. The obtained results confirm that the change in the contents of GLYMO and TEOS at the expense of TMSPM did not negatively affect antibacterial activity of the prepared layers and that layers polymerized with both thermally initiated and photoinitiated polymerization provided practically identical results. Antibacterial activity of the tested hybrid layers created by exposure to visible light (standard fluorescent lamp) ranges from 60 to 180 minutes, also without apparent dependence on changes in composition within the specified ranges.

The layers prepared on glass and stainless steel were also tested for abrasion resistance. The method monitored the number of mechanical actions on the monitored layer that was necessary to wear the layer through to the base (number of cycles N). The layers were tested on ELCOMETER 1720 Washability tester with an "artificial finger" as a friction segment (felt disc with diameter of 65 mm and 10 mm thick, sliding on the tested surface with the defined speed of 37 cycles per minute, with additional loading of the friction segment with 675 g). The test provides relative results. The evaluation of the wear was performed with optical microscopy after each 10 cycles. Results obtained on the prepared samples are provided in Table 3. The results have shown that abrasion resistance of layers on glass increases with the increasing content of TEOS (within the range of the tested samples). The increasing content of GLYMO does not have a significant effect on abrasion resistance of layers on glass but it significantly increases abrasion resistance of layers on stainless steel, which gets close to the value of abrasion resistance on glass. This suggests a significant improvement of adhesion of layers on stainless steel after adding GLYMO into their composition.

**Table 3: Results of determination of time needed for 100% inhibition after exposure to UV-A and determination of abrasion resistance for samples on glass and on stainless steel.**

| Layer developed from sol | Substrate | Molar fraction TMSPM | Molar fraction TEOS | Molar fraction GLYMO | P | Exposure time needed for 100% inhibition [min] | | | Number of cycles N |
|---|---|---|---|---|---|---|---|---|---|
| | | | | | | MRSA | E. Coli | St. Aureus | |
| 1 | Glass | 0.85 | 0.00 | 0.00 | T | 35 | 120 | 110 | 100 |
| 1 | Steel | 0.85 | 0.00 | 0.00 | T | 35 | 120 | 115 | 50 |
| 1 | Glass | 0.85 | 0.00 | 0.00 | S1 | 30 | 115 | 100 | 80 |
| 1 | Steel | 0.85 | 0.00 | 0.00 | S1 | 30 | 115 | 105 | 40 |
| A | Glass | 0.65 | 0.10 | 0.10 | T | 30 | 100 | 90 | 120 |
| A | Steel | 0.65 | 0.10 | 0.10 | T | 30 | 110 | 100 | 80 |
| A | Glass | 0.65 | 0.10 | 0.10 | S1 | 25 | 95 | 80 | 110 |
| A | Steel | 0.65 | 0.10 | 0.10 | S1 | 25 | 90 | 85 | 80 |
| Ae | Steel | 0.65 | 0.10 | 0.10 | T | 30 | 100 | 90 | 70 |
| Ae | Steel | 0.65 | 0.10 | 0.10 | S1 | 25 | 95 | 80 | 80 |
| D | Glass | 0.375 | 0.375 | 0.10 | T | 20 | 100 | 90 | 150 |
| D | Steel | 0.375 | 0.375 | 0.10 | T | 30 | 105 | 90 | 100 |
| D | Glass | 0.375 | 0.375 | 0.10 | S1 | 20 | 90 | 80 | 150 |
| D | Steel | 0.375 | 0.375 | 0.10 | S1 | 25 | 100 | 95 | 110 |
| De | Steel | 0.375 | 0.375 | 0.10 | T | 30 | 105 | 100 | 100 |
| De | Steel | 0.375 | 0.375 | 0.10 | S1 | 30 | 95 | 80 | 90 |
| E | Glass | 0.55 | 0.10 | 0.20 | T | 25 | 105 | 95 | 130 |
| E | Steel | 0.55 | 0.10 | 0.20 | T | 30 | 100 | 105 | 120 |
| E | Glass | 0.55 | 0.10 | 0.20 | S1 | 20 | 90 | 80 | 130 |
| E | Steel | 0.55 | 0.10 | 0.20 | S1 | 25 | 100 | 90 | 110 |

| | | | | | | | | | |
|---|---|---|---|---|---|---|---|---|---|
| Legend e ........ solvent ethanol (instead of isopropyl alcohol) P ........ method of polymerization and employed radical catalyst : T - thermal (BPO, 150 °C/3 hours) S1 - UV-A (bis(2,4,6-trimethylbenzoyl) phenylphosphine oxide, 2 hours) | | | | | | | | | |

### Example 3

The initial sols were prepared using a modified sol-gel method with the procedure described in the Example 1.

The initial sol was the one for the layer A indicated in Table 1 with additions of chromium nitrate and/or vanadyl acetylacetonate into the reaction mixture in quantities corresponding to the content (recalculated to the element) indicated in Table 4. After sol application on glass by dipping the samples were left in the laboratory environment to evaporate isopropyl alcohol and subsequently they were exposed to thermally initiated polymerization in a drying oven at 150 °C for 3 hours.

Antibacterial properties of the prepared layers were tested with an identical procedure as in the Example 1. Results of layers on glass obtained after exposure to UV-A are summarized in Table 4. The obtained results confirm that layers containing chromium Cr (III) and/or vanadium V demonstrate practically the same times for 100% inhibition in respect to the MRSA strain, however they are slightly better in comparison with the other tested bacterial strains.

**Table 4: Results of determination of time needed for 100% inhibition for samples on glass after exposure to UV-A.**

| Layer | Sol c | Content of Cr [wt. % in dry matter ] | Content of V [wt. % in dry matter] | Wt. ratio of dry matter: nanoparticles | Exposure time necessary for 100% inhibition [min] | | |
|---|---|---|---|---|---|---|---|
| | | | | | MRSA | E. Coli | St. Aureus |
| A | 5.97 | 0 | 0 | 100 : 0 | 30 | 100 | 100 |
| A-Cr | 6.03 | 2 | 0 | 100 : 0 | 35 | 100 | 80 |
| A-V | 6.02 | 0 | 2 | 100 : 0 | 30 | 90 | 90 |
| A-CrV | 6.07 | 1 | 1 | 100 : 0 | 30 | 90 | 80 |

| | | | | | | | |
|---|---|---|---|---|---|---|---|
| Legend Sol c ... sol concentration [g of dry matter per 100 g of the sol] | | | | | | | |

## Claims

1. An antibacterial hybrid layer operating against pathogenic bacteria, particularly against the bacterial strain MRSA **characterized by** the fact that it consists of hybrid polymer formed by the reaction of 3-(trialkoxysilyl) propyl methacrylate and/or 3-(trialkoxysilyl) propyl acrylate with 3-glycidoxy-propyltrialkoxy-silane, titanium alkoxide and silicon alkoxide, with addition of soluble salts of silver, copper and zinc and potentially also with addition of titanium oxide nanoparticles.

2. An antibacterial layer under the claim No. 1 **characterized by** the fact that the hybrid polymer contains addition of soluble chromium (III) and/or vanadium salts.

3. An antibacterial layer under the claim No. 1 **characterized by the fact that** up to 90 mol. % of 3-(trialkoxysilyl) propyl methacrylate is replaced with an equimolar mixture of methyl methacrylate and silicon alkoxide and, similarly, up to 90 mol. % of 3-(trialkoxysilyl) propyl acrylate is replaced with an equimolar mixture of methyl acrylate and silicon alkoxide.

4. A method to develop an antibacterial hybrid layer operating against pathogenic bacteria, particularly against the bacterial strain MRSA, by application of sol prepared by the sol-gel method on the surface of substrate and subsequent polymerization of the layer **characterized by the fact that** the sol is prepared from 3-(trialkoxysilyl)propyl methacrylate and/or 3-(trialkoxysilyl) propyl acrylate with 3-glycidoxy-propyltrialkoxy-silane, titanium alkoxide and silicon alkoxide, soluble salts of silver, copper and zinc, radical polymerization catalyst, alcohol as solvent, water and acid as catalyst of polycondensation of an inorganic part of the hybrid network so that the molar ratio of 3-(trialkoxysilyl) propyl methacrylate and/or 3-(trialkoxysilyl) propyl acrylate to 3-glycidoxy-propyltrialkoxy-silane is 99 : 1 to 70 : 30, the molar ratio of 3-(trialkoxysilyl) propyl methacrylate and/or 3-(trialkoxysilyl) propyl acrylate to titanium alkoxide is 95 : 5 to 50 : 50, the molar ratio of 3-(trialkoxysilyl) propyl methacrylate and/or 3-(trialkoxysilyl) propyl acrylate to silicon alkoxide (without the share of silicon alkoxide replacing in the equimolar mixture with alkyl methacrylate and/or alkyl acrylate a part of 3-(trialkoxysilyl) propyl methacrylate or 3-(trialkoxysilyl) propyl acrylate) is 99 : 1 to 40 : 60, the content of silver, copper and zinc compounds (recalculated to metal in dry matter) is 0.1 to 5 wt. % for Ag, 0.1 to 10 wt. % for Cu and 0.1 to 5 wt. % for Zn, the content of radical polymerization catalyst is 0.2 to 10 wt. % per dry matter weight and the molar ratio of water content k = [H₂O]/[3-(trialkoxysilyl) propyl methacrylate + 3-(trialkoxysilyl) propyl acrylate + 3-glycidoxy-propyltrialkoxy-silane + titanium alkoxide + silicon alkoxide] reaches the values of k = 1.6 to 2.8, while the sol after the application and after solvent evaporation polymerizes thermally at 80 to 200 °C for 30 minutes to 6 hours or undergoes photoinitiated polymerization for 1 second to 3 hours.

5. A method under the claim No. 4 **characterized by the fact that** additional soluble compounds of chromium (III) and/or vanadium are added into the sol during its preparation, in the quantity 0.1 to 5 wt. % Cr and/or 0.1 to 5 wt. % V when recalculated to metals in dry matter.

6. A method under the claim No. 4 **characterized by the fact that** the 3-(trialkoxysilyl) propyl methacrylate is 3-(trimethoxysilyl) propyl methacrylate (TMSPM), the 3-(trialkoxysilyl) propyl acrylate is 3-(trimethoxysilyl) propyl acrylate (TMSPA), the 3-glycidoxypropyltrialkoxysilane is 3-glycidoxy-propyltrimethoxy-silane (GLYMO), the titanium alkoxide is titanium isopropoxide (IPTI), the silicon alkoxide is silicon ethoxide (TEOS) and the acid is nitric acid.

7. A method under the claims No. 4 or 5 **characterized by the fact that** the soluble salts of silver, copper, zinc and chromium (III) are nitrates and the soluble salt of vanadium is acetylacetonate.

8. A method under the claim No. 4, **characterized by the fact that** the radical polymerization catalyst for the thermal polymerization is dibenzoyl-peroxide (BPO) and for the photoinitiated polymerization it is bis(2,4,6-trimethylbenzoyl) phenylphosphine oxide or 2-hydroxy-2-methyl-1 phenyl-propane-1-on.

9. A method under the claim No. 4 **characterized by the fact that** photoactive nanoparticles of titanium oxide are added into the sol during its preparation in the quantity corresponding to the ratio of dry matter weight to titanium oxide nanoparticles weight from 99 : 1 to 25 : 75.

10. A method under the claim No. 4 **characterized by the fact that** up to 90 mol. % of 3-(trialkoxysilyl) propyl methacrylate is replaced with an equimolar mixture of methyl methacrylate and silicon alkoxide and, similarly, up to 90 mol. % of 3-(trialkoxysilyl) propyl acrylate is replaced with an equimolar mixture of methyl acrylate and silicon alkoxide.

11. A method under the claim No. 4 **characterized by the fact that** the sol, after its application and after solvent evaporation, undergoes thermally initiated polymerization at 150 °C for 2 to 4 hoursor photoinitiated polymerization for 1 to 60 minutes.
